# FASCICULE DE BREVET EUROPEEN

(11) **EP 3 387 306 B1**
(45) Date de publication et mention de la délivrance du brevet: **29.04.2020**
(21) Numéro de dépôt: 16805070.6
(22) Date de dépôt: 30.11.2016
(51) Int. Cl.: F16K 31/122, F16K 31/163, F15B 15/06, F15B 15/14

(54) **ACTIONNEUR ROTATIF À POSITIONNEMENT MULTIPLE CONTRÔLÉ PAR UN FLUIDE**
FLUIDBETÄTIGTER DREHANTRIEB MIT MEHREREN SCHALTSTELLUNGEN
FLUID ACTUATED ROTARY ACTUATOR WITH MULTIPLE STOP POSITIONS

(30) Priorité: 11.12.2015 BE 201505817
(43) Date de publication de la demande: 17.10.2018
(73) Titulaire: Out And Out Chemistry S.P.R.L., 6060 Gilly (Charleroi) (BE)
(72) Inventeur: VILLERET, Guillaume, 59216 Dimont (FR); TADINO, Vincent, 5650 Chastrès (BE); LORENT, Marc, 08600 Givet (FR); ORLEANS, Adrien, 7000 Mons (BE)
(74) Mandataire: Gevers Patents
(86) Numéro de dépôt international: PCT/EP2016/079204
(87) Numéro de publication internationale: WO 2017/097648

(56) Documents cités:
- EP-A1- 0 077 596
- WO-A1-84/03128
- DE-A1- 3 925 887
- DE-A1- 19 828 465
- US-A1- 2001 029 835

## Description

### Domaine technique

L'invention se rapporte à un dispositif pour induire un mouvement de rotation, de préférence avec plusieurs positions angulaires d'arrêts définies. Un tel dispositif peut être par exemple utilisé pour le contrôle d'une ou plusieurs vannes. Les inventeurs proposent également un système pour contrôler le passage d'un fluide dans un conduit et une machine de synthèse ou de purification d'éléments comprenant le dispositif de contrôle de l'invention.

### Etat de la technique

Des dispositifs pour induire un mouvement de rotation sont connus, utilisés par exemple pour le contrôle de vannes.

WO2013/127439 A1 décrit par exemple un dispositif à air comprimé pour le contrôle de vannes. Ce dispositif comprend un premier et un deuxième vérins rotatifs à palettes connectés entre eux par emboîtement mutuel. Ces deux vérins sont généralement alimentés par de l'air comprimé comme fluide de contrôle. L'utilisation des deux vérins de ce dispositif permet d'imposer trois positions d'une vanne à contrôler, par exemple trois orientations différentes repérées par des angles 0°, 90° et 180°.

Le dispositif décrit dans WO2013/127439 A1 présente certains inconvénients. Le taux de fuite en air comprimé n'est pas négligeable et pour certaines applications, il n'est pas acceptable. D'autre part, ses différents éléments sont relativement difficiles à fabriquer et le dispositif global est relativement compliqué à mettre en oeuvre.

US 2001/0029835 A1 décrit par exemple un dispositif à air comprimé permettant d'imposer trois positions à un axe en convertissant un mouvement généré par des vérins linéaires en un mouvement de rotation.

Le dispositif décrit dans US 2001/0029835 A1 présente certains inconvénients. L'architecture complexe que présente notamment l'imbrication d'un vérin et d'un élément de conversion de mouvement linéaire en mouvement rotatif apparaît difficile à mettre en œuvre à cause de problème d'étanchéité au niveau du système de conversion de mouvement linéaire en mouvement rotatif.

DE 198 28 465 A1 décrit un dispositif à vérins pour le contrôle de vannes de sorte que le mouvement linéaire des vérins selon un axe longitudinal est converti en mouvement rotatif autour d'un axe perpendiculaire à l'axe longitudinal par un moyen de conversion à crémaillère.

### Résumé de l'invention

Selon un premier aspect, un des buts de la présente invention est de fournir un dispositif pour induire un mouvement de rotation qui soit plus facile à fabriquer et à mettre en œuvre. A cet effet, les inventeurs proposent un dispositif pour induire un mouvement de rotation autour d'une direction longitudinale pour le contrôle de vanne et comprenant le long de ladite direction longitudinale :
- un premier vérin linéaire comprenant un premier carter et un premier piston apte à décrire un mouvement de translation le long de ladite direction longitudinale dans ledit premier carter, ledit premier vérin étant apte à être alimenté par un fluide de contrôle ;
- un deuxième vérin linéaire comprenant un deuxième carter un deuxième piston apte à décrire un mouvement de translation le long de ladite direction longitudinale dans ledit deuxième carter, ledit deuxième vérin étant apte à être alimenté par un fluide de contrôle ;
- un organe de conversion de mouvement linéaire en mouvement rotatif pour convertir un mouvement de translation du deuxième piston le long de ladite direction longitudinale en un mouvement de rotation autour de ladite direction longitudinale ;
lesdits premier et deuxième vérins étant configurés de sorte que le premier vérin est apte à influencer le deuxième vérin;
et où :
- ledit premier piston comprend un premier plateau apte à délimiter une première et une deuxième chambre dans ledit premier carter ;
- ledit premier vérin comprend un premier et un deuxième ports pour alimenter respectivement lesdites première et deuxième chambres avec ledit fluide de contrôle et imposer un mouvement de translation dudit premier piston grâce à une différence de pression entre lesdites première et deuxième chambres :
   - ledit deuxième piston comprend un deuxième plateau apte à délimiter une troisième et une quatrième chambre dans ledit deuxième carter ;
   - ledit deuxième vérin comprend un troisième et un quatrième ports pour alimenter respectivement lesdites troisième et quatrième chambres avec ledit fluide de contrôle et imposer un mouvement de translation dudit deuxième piston grâce à une différence de pression entre lesdites troisième et quatrième chambres ;
   et :
   - ledit organe de conversion comprend un élément rotatif distinct du deuxième piston pour convertir un mouvement de translation du deuxième piston en un mouvement de rotation, ledit élément rotatif étant situé à l'extérieur des premier et deuxième carters.
La direction longitudinale peut être par exemple définie comme une direction le long de laquelle ou parallèle à laquelle les premier et deuxième pistons peuvent se déplacer.

Les premier et deuxième vérins du dispositif de l'invention sont linéaires. Ces derniers présentent un degré d'étanchéité plus élevé que des vérins rotatifs à palettes qui utilisent un fluide de contrôle. Au final, le dispositif de l'invention présente moins de fuite en fluide de contrôle. Les vérins linéaires étant plus étanches que des vérins rotatifs, il n'est pas nécessaire de prévoir des coques d'étanchéité additionnelles avec le dispositif de l'invention, ni d'utiliser des pièces d'étanchéité très élaborées. Avec le dispositif de l'invention, il est en effet possible d'avoir des bonnes performances d'étanchéité en utilisant des éléments d'étanchéité simples, tels des o-rings (ou joints toriques), qui sont disponibles dans le commerce et bons marchés. La fabrication du dispositif de l'invention nécessite aussi moins de précaution lors de l'assemblage des différents éléments pour un même degré d'étanchéité. En outre, il est plus facile de fabriquer des vérins linéaires que des vérins rotatifs. En particulier, il est plus simple de fabriquer soi-même des vérins linéaires que des vérins rotatifs. On peut donc se passer d'acheter des vérins commerciaux avec le dispositif de l'invention et ne plus être tributaire de fournisseurs. Ces différentes raisons permettent d'avoir un dispositif de contrôle plus simple à fabriquer et à mettre en oeuvre par rapport au dispositif décrit dans WO2013/127439 A1.

Le dispositif de l'invention présente d'autres avantages. Etant plus facile à fabriquer et nécessitant moins de pièces dédicacées à l'obtention de niveaux d'étanchéité élevés, le dispositif de l'invention est moins cher. Il permet aussi de travailler avec des pressions moins élevées pour le fluide de contrôle. A titre d'exemple, les inventeurs ont trouvé qu'avec 4.5 bar de pression, il est possible avec le dispositif de l'invention d'avoir un couple de sortie équivalent au dispositif de WO2013/127439 A1 utilisé avec 6 bar; soit environ 25% de réduction pour un même encombrement. Cet aspect facilite aussi la conception du dispositif de l'invention. Il n'y a pas besoin de logique de contrôle élaborée pour le contrôle du dispositif de l'invention. Chaque vérin peut présenter uniquement deux configurations ou deux états de fonctionnement. Ces deux configurations peuvent être nommées 'tige entrée / tige sortie' ou 'IN / OUT'. Le dispositif de contrôle de l'invention permet d'imposer des rotations dans deux sens et pas uniquement dans un seul sens. Grâce à cet aspect, le dispositif de l'invention peut être utilisé dans de nombreuses applications. Le dispositif de l'invention est peu encombrant. Il peut être utilisé pour le contrôle de vannes dans des environnements corrosifs, radioactifs, humides, compacts. Il n'est pas non plus nécessaire de prévoir des blindages électromagnétiques pour protéger des éléments électroniques tels que des capteurs par exemple.

Le dispositif de l'invention revendiqué présente d'autres avantages par rapport au document US 2001/0029835 A1 dans lequel le dispositif nécessite l'imbrication du système de conversion de mouvement linéaire en mouvement rotatif avec un piston au sein d'un même carter ainsi que l'alimentation en fluide d'une chambre d'un piston au travers d'une deuxième chambre. Le dispositif de l'invention revendiqué nécessite quatre étanchéités dynamiques alors que le dispositif de US 2001/0029835 A1 nécessite six étanchéités dynamiques. Le fait de réduire le nombre d'étanchéités dynamique rend le dispositif plus fiable en terme d'étanchéité et plus simple au niveau de sa fabrication et de son assemblage.
Le dispositif de l'invention revendiqué ne nécessite pas d'architecture complexe telle que décrite par le document US 2001/0029835 A1 et est compatible avec l'utilisation de vérins commerciaux auxquels l'adjonction d'un système de conversion de mouvement linéaire en mouvement rotatif ne nécessite pas de modification des vérins linéaires.

Le dispositif de l'invention revendiqué dispose de quatre chambres équipée d'un contrôle de pression de fluide afin de pouvoir actionner les pistons des vérins indépendamment les uns des autres. Les quatre chambres du dispositif de l'invention sont toutes différentes et distinctes les unes des autres et alimentées indépendamment par le fluide de contrôle. Ceci présente un avantage certain par rapport au document US 2001/0029835 A1 qui ne présente que trois chambres permettant le contrôle de deux pistons. Il apparait ainsi que les deux pistons ne peuvent pas être contrôlés indépendamment pour tous les mouvements de rotation de l'arbre de sortie. Un contrôle indépendant des vérins est particulièrement recherché pour le contrôle de vanne afin d'avoir des mouvements de vérins bien contrôlés pour une conversion en mouvement de rotation dont les vitesses de rotation angulaires sont importantes.

Le dispositif de l'invention pourrait être appelé un activateur ou actionneur pour une ou plusieurs vannes. De préférence, le dispositif de l'invention comprend donc, le long d'une direction longitudinale, les éléments suivants dans l'ordre suivant : le premier vérin, le deuxième vérin et l'organe de conversion. On peut alors obtenir un organe de conversion et donc un dispositif selon l'invention particulièrement simples et compacts. L'élément rotatif compris dans l'organe de conversion est distinct du premier piston.

Selon un mode de réalisation possible, l'organe de conversion comprend un troisième carter. L'élément rotatif est situé dans le troisième carter. L'organe de conversion comprend un troisième carter qui est différent des premier et deuxième carters.
De préférence, cet élément rotatif comprend au moins une portion creuse. Il est alors possible de prévoir une coopération particulièrement simple entre l'organe de conversion et le deuxième vérin, ce dernier pouvant par exemple avoir au moins une portion qui peut s'insérer dans ladite au moins une portion creuse de l'élément rotatif.
De préférence, ledit élément rotatif comprend sur au moins une portion de sa surface extérieure une rainure. En utilisant une forme de ladite rainure qui n'est pas une droite parallèle à la direction longitudinale, il est alors possible d'obtenir un organe de conversion simple et facile à mettre en oeuvre. L'élément rotatif peut comprendre plus qu'une rainure sur au moins une portion de sa surface extérieure. De préférence, il comprend deux rainures. De préférence, la ou les rainures ont une forme hélicoïdale le long de ladite portion de la surface extérieure de l'élément rotatif, autour de la direction longitudinale du dispositif de l'invention.

De préférence, le dispositif de l'invention comprend au niveau du deuxième piston un ergot s'étendant selon une direction essentiellement perpendiculaire à ladite direction longitudinale et apte à s'insérer dans la ou les rainures dudit élément rotatif quand ce dernier en comprend, pour coupler mécaniquement ledit deuxième piston audit élément rotatif. L'ergot peut faire partie intégrante du deuxième piston, ce dernier comprenant alors un tel ergot. Quand l'ergot ne fait pas partie intégrante du deuxième piston, il lui est mécaniquement couplé et de préférence fixé. Par exemple, l'ergot peut être constitué d'une goupille cylindrique.

Le dispositif de l'invention peut comprendre en outre un élément de liaison rotatif pour s'emboîter sur ladite au moins une vanne à contrôler, ledit élément de liaison étant mécaniquement couplé à un élément dudit organe de conversion. Par exemple, l'élément de liaison peut être relié à l'élément rotatif de l'organe de conversion lorsque ce dernier comprend un tel élément.

De préférence, le dispositif de l'invention est apte à imposer à un arbre de sortie au moins trois positions angulaires différentes séparées de 90° les unes des autres.
En général, le deuxième vérin à une course deux fois plus grande que ledit premier vérin.
De préférence, ledit premier plateau a une surface (ou aire) supérieure audit deuxième plateau. En d'autres termes, l'aire du premier plateau est supérieure à l'aire du deuxième plateau pour ce mode de réalisation préféré. Le premier piston peut alors présenter par exemple et de préférence une force deux fois plus grande que le deuxième piston, pour une même pression en fluide de contrôle. De préférence, l'aire du premier plateau est deux fois supérieure à l'air du deuxième plateau.

Le dispositif de l'invention peut comprendre un troisième vérin linéaire couplé à au moins un des premier et deuxième vérins de sorte qu'une configuration dudit troisième vérin est apte à influencer une configuration d'au moins un des premier et deuxième vérins. Il est alors possible d'avoir un dispositif de contrôle de vanne(s) apte à imposer plus de trois orientations différentes à ladite (ou auxdites) vanne(s). Et cela, particulièrement simplement. Le dispositif de l'invention peut comprendre plus de trois vérins linéaires. On peut alors obtenir des orientations additionnelles d'une ou de vanne(s) à contrôler. Par exemple, le dispositif de l'invention peut comprendre quatre, cinq, six, sept, huit, neuf, dix vérins linéaires.
De préférence, le dispositif selon l'invention est apte à imposer à un arbre de sortie au moins quatre positions angulaires différentes séparées de 90° les unes des autres.

En général, les premier et deuxième vérins comprennent au moins un (deux en général) port pour les alimenter avec un fluide de contrôle. Des exemples de fluide de contrôle sont: air comprimé, gaz inerte, huile ou tout autre fluide.

Les inventeurs proposent également un système pour contrôler un passage d'un fluide dans un conduit et comprenant :
- au moins une vanne pour contrôler ledit passage dudit fluide dans ledit conduit;
- au moins un dispositif tel que décrit précédemment, chacun dudit au moins un dispositif étant couplé à chacune de ladite au moins une vanne pour la contrôler.
Les différents modes de réalisation préférés du dispositif de l'invention peuvent être utilisés dans ce système. Les avantages du dispositif et de ses différents modes de réalisation s'appliquent aussi à ce système. En particulier, il est possible d'avoir un système présentant un haut niveau d'étanchéité et qui est simple à mettre en œuvre.

Les inventeurs ont aussi conçu une machine de synthèse ou de purification d'éléments comprenant :
- un système tel que décrit précédemment,
- une unité de commande pour commander le dispositif de ce système et qui a aussi été décrit précédemment,
- le conduit dans lequel le passage d'un fluide est contrôlé,
de sorte que au moins une vanne du système est située dans ledit conduit. Les différents modes de réalisation préférés du dispositif et du système de l'invention peuvent être utilisés dans cette machine de synthèse ou de purification d'éléments. Les avantages du dispositif et du système de l'invention, ainsi que ceux des différents modes de réalisation de ce dispositif et de ce système s'appliquent aussi à cette machine. En particulier, il est possible d'avoir une machine présentant un haut niveau d'étanchéité et qui est simple à mettre en œuvre.
De préférence, ledit conduit est une conduite d'une cassette à usage unique.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- les Fig.1-3 montrent différentes vues d'un même mode de réalisation du dispositif selon l'invention;
- la Fig.4 montre un exemple d'élément de liaison pour s'emboîter sur une vanne à contrôler ;
- la Fig. 5 illustre un principe de fonctionnement du dispositif de l'invention selon un mode de réalisation préféré;
- la Fig. 6 illustre un principe de fonctionnement du dispositif de l'invention selon un autre mode de réalisation possible;
- la Fig. 7 montre un assemblage de cinq dispositifs selon l'invention.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

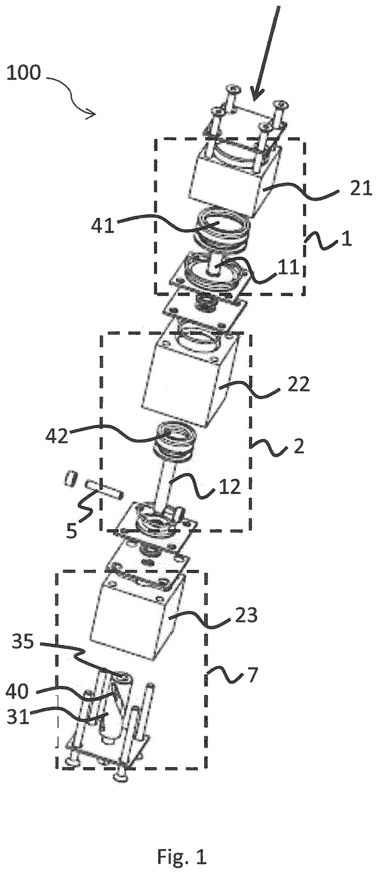

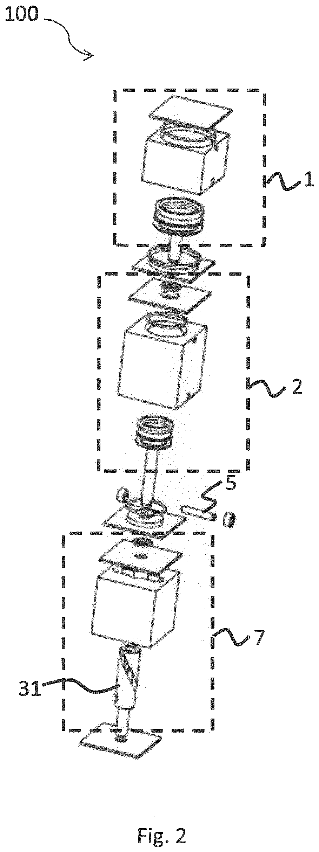

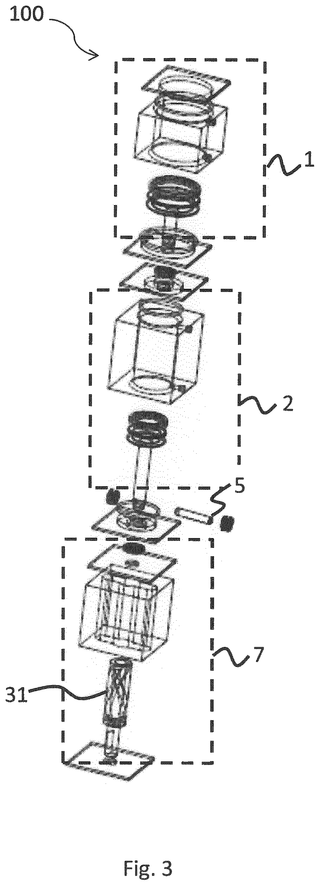

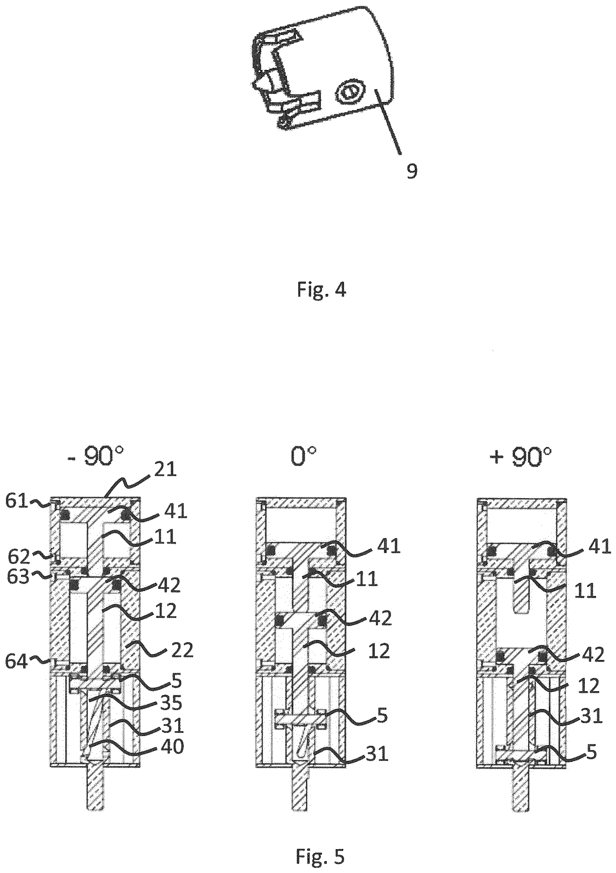

Les figures 1 à 3 montrent différentes vues d'un exemple de dispositif 100 selon l'invention. Le long d'une direction longitudinale, symbolisée par une flèche à la figure 1, le dispositif 100 comprend un premier 1 et un deuxième 2 vérins. Ces deux vérins (1,2) sont couplés de sorte qu'une configuration (ou état de fonctionnement) du premier vérin 1 puisse influencer une configuration (ou état de fonctionnement) du deuxième vérin 2. On pourrait également dire que les premier et deuxième vérins (1,2) sont couplés de sorte que le premier 1 est apte à influencer le deuxième 2 et plus particulièrement un état de fonctionnement du deuxième vérin 2. Par exemple, les premier et deuxième vérins (1,2) peuvent être couplés mécaniquement. Cela ressortira plus clairement lors de la description du fonctionnement du dispositif 100 de l'invention qui sera faite avec la figure 5.

Le premier 1 (respectivement deuxième 2) vérin est un vérin linéaire comprenant un premier 11 (respectivement deuxième 12) piston. Les premier et deuxième pistons (11,12) peuvent être contrôlés par l'intermédiaire d'un fluide de contrôle. Des exemples de fluide de contrôle sont : air comprimé, gaz inerte, huile ou tout autre fluide. Des exemples de vérins linéaires sont connus d'un homme du métier. En général, le premier 1 (respectivement deuxième 2) vérin comprend un premier 21 (respectivement deuxième 22) carter dans lequel peut coulisser le premier 11 (respectivement deuxième 12) piston.

Le dispositif de l'invention 100 comprend également un organe (ou élément) de conversion 7 de mouvement linéaire en mouvement rotatif pour convertir un mouvement de translation du deuxième piston 12 en un mouvement de rotation. Ainsi, quand le deuxième piston 12 décrit un mouvement linéaire, l'organe de conversion 7 permet de transformer ce mouvement de sorte qu'un élément connecté à lui décrive un mouvement de rotation. En général, l'organe de conversion 7 comprend un troisième carter 23.

L'organe de conversion 7 comprend de préférence un élément rotatif 31 pour convertir un mouvement de translation du deuxième piston 12 en un mouvement de rotation. Ce mode de réalisation préféré est illustré à la figure 1. Un élément rotatif est un élément qui peut décrire un mouvement de rotation. De préférence, l'élément rotatif 31 est logé dans le troisième carter 23.

Comme on peut le voir aux figures 1 à 3, l'élément rotatif 31 comprend de préférence une portion creuse. Dans le mode de réalisation préféré illustré à cette figure, le deuxième piston 12 peut pénétrer dans le creux 35 de cette portion creuse de l'élément rotation 31. L'élément de rotation 31 est de préférence fixe en translation.

Comme on peut aussi le voir aux figures 1 à 3, l'élément rotatif 31 comprend de préférence une ou plusieurs rainures 40 sur au moins une portion de sa surface extérieure. Dans le mode de réalisation préféré de la figure 1, l'élément rotatif 31 comprend deux rainures 40. De préférence, cette ou ces rainures 40 sont hélicoïdales le long de la direction longitudinale. Dans l'exemple des figure 1 à 3, l'élément rotatif 31 a une symétrie de révolution autour d'un axe de symétrie et les deux rainures 40 dudit élément rotatif 31 décrivent une hélice autour de cet axe de symétrie. Dans l'exemple des figures 1 à 3 où premier vérin 1, deuxième vérin 2 et organe de conversion 7 sont alignés, l'axe de symétrie de l'élément rotatif 31 coïncide avec la direction longitudinale (flèche de la figure 1).

Comme on peut le voir aux figures 1 à 3, le dispositif 100 de l'invention comprend de préférence un ergot 5 au niveau du deuxième piston 12. L'ergot 5 pourrait aussi être appelé pièce mécanique ou élément mécanique. De préférence, cet ergot 5 est mécaniquement couplé, par exemple fixé, au deuxième piston 12. Pour coupler l'ergot 5 au deuxième piston 12, on peut par exemple percer ce dernier 12 d'un trou, insérer l'ergot 5 au travers, puis le bloquer par serrage mécanique par exemple (ou en vissant ou collant l'ergot 5 sur le deuxième piston 12). Notons que le blocage de l'ergot 5 sur le deuxième piston 12 n'est pas nécessaire. L'ergot 5 peut être monté avec un certain jeu dans un trou du deuxième piston 12 ; l'ergot 5 est alors maintenu en position par exemple par l'intermédiaire de parois de rainures pratiquées dans le troisième carter 23. L'ergot 5 s'étend selon une direction essentiellement perpendiculaire à ladite direction longitudinale et est apte à s'insérer dans les deux rainures 40 de l'élément rotatif 31, pour coupler mécaniquement le deuxième piston 12 audit élément rotatif 31. En effet, le deuxième piston 12 peut pénétrer le creux de la portion creuse de l'élément rotatif 31 et l'ergot 5 permet de coupler mécaniquement le deuxième piston 12 à l'élément rotatif 31 de la manière suivante. Quand le deuxième piston 12 est dans le creux de l'élément rotatif 31 et effectue un mouvement de translation par rapport à lui, l'ergot 5, dont deux extrémités sont logées dans les rainures 40 hélicoïdales de l'élément rotatif 31, décrit également un mouvement de translation impose à l'élément rotatif 31 de tourner.

Des rainures internes (de préférence linéaires) peuvent être prévues à l'intérieur du troisième carter 23 pour permettre à l'ergot 5 de glisser le long de ces dernières quand il décrit un mouvement de translation par rapport au troisième carter 23. De préférence, l'ergot 5 est alors muni de roulements à bille à ses extrémités pour lui permettre un déplacement plus facile à l'intérieur du troisième carter 23. De tels roulements sont illustrés à la figure 1. Les roulements à billes peuvent par exemple être remplacés par des bagues de glissement. Les roulements à bille ou les bagues de glissement ne sont pas indispensables. L'ergot 5 qui peut avoir la forme d'une goupille peut glisser directement, sans roulements, dans une ou des rainures du troisième carter 23. Des rainures dans le troisième carter 23 permettent d'empêcher la rotation de l'ergot 5 lors de sa translation. D'autres solutions pourraient être utilisées comme par exemple bloquer la rotation du deuxième piston 12 avec l'utilisation d'une tige hexagonale, d'un tige carrée, d'une tige triangulaire ou d'un plateau non circulaire. Selon une autre variante possible, il est possible de prévoir une rainure 40 droite dans l'élément rotatif 31 et une rainure hélicoïdale dans le troisième carter 23.

D'autres formes d'ergot 5 que celle montrée aux figures 1 à 3 pourraient être envisagées pour coupler le deuxième piston 12 à l'élément rotatif 31. De même, d'autres moyens de couplage entre le deuxième vérin 2 et l'organe de conversion 7 pourraient être envisagés.

De préférence, le dispositif 100 de l'invention comprend des pièces d'étanchéité telles des joints (O-rings ou Quad-ring par exemple) pour assurer l'étanchéité entre les différents éléments. Comme cela est illustré à la figure 1, le dispositif 100 de l'invention peut aussi comprendre une ou plusieurs pièces intercalaires s'étendant essentiellement perpendiculairement à la direction longitudinale.

De préférence, le dispositif 100 de l'invention comprend un élément de liaison 9 rotatif apte à s'emboîter sur la vanne à contrôler. Un exemple d'élément de liaison 9 est montré à la figure 4. Cet élément de liaison 9 est alors mécaniquement couplé à l'organe de conversion 7. Par exemple l'élément de liaison 9 est connecté à l'élément rotatif 31. En prenant l'exemple de la figure 4, la partie droite de l'élément de liaison 9 est alors connectée à l'élément rotatif 31, tandis que sa partie de gauche est destinée à être couplée à une vanne à contrôler par exemple. De préférence, la partie de gauche de l'élément de liaison 9 est apte à coopérer avec un robinet en forme de T, les branches du T se logeant dans les encoches que l'on peut voir sur la partie gauche de l'élément de liaison 9 de la figure 4.

Le long de la direction longitudinale, le dispositif 100 de l'invention a par exemple une taille comprise entre 4 et 10 cm. D'autres tailles sont néanmoins possibles. Ainsi, il est possible d'avoir un dispositif 100 de plusieurs dizaines de centimètres. Les premier 21, deuxième 22 et troisième 23 carters ont par exemple chacun une taille comprise entre 5 cm³ et 15 cm³. Néanmoins, d'autres tailles (par exemple carters de 1000 cm³) pourraient être envisagées, par exemple pour faire tourner des vannes trois voies dans des installations industrielles. Différents types de matériaux peuvent être réalisés pour réaliser le dispositif 100 de l'invention. De préférence, les enveloppes externes, telles par exemple les premier 21, deuxième 22 et troisième 23 carters sont en aluminium. De préférence, les premier 11 et deuxième 12 pistons, ainsi que l'ergot 5 sont en acier inoxydable. De préférence, l'élément rotatif 31 de l'organe de conversion 7 qui est montré aux figures 1 à 3 est en bronze, de préférence auto-lubrifiant.

De préférence, les premier 1 et deuxième 2 vérins peuvent être alimentés par un fluide de contrôle pour les contrôler. Pour ce faire, chaque vérin (1, 2), a de préférence une entrée de fluide de contrôle (61,63) et une sortie de fluide de contrôle (62, 64). Le fluide de contrôle peut être envoyé en bas ou en haut des carters (21, 22) pour imposer le mouvement des pistons (11,12).

Quand le fluide de contrôle est de l'air comprimé, des pressions de travail sont généralement comprises entre 2 et 10 bar. De préférence, quand le fluide de contrôle est de l'air comprimé, il est fourni aux premier 1 et deuxième 2 vérins par l'intermédiaire d'un système de vannes à air comprimé. Pour contrôler l'injection d'air comprimé dans les premier 1 et deuxième 2 vérins, on peut par exemple utiliser deux vannes solénoïdes pilotées par du 24 V.

De préférence, le rapport des surfaces des premier 41 et deuxième 42 plateaux des premier 11 et deuxième 12 pistons est supérieur à un et de manière encore préférée, il est égal à 2. Dans ce dernier cas, la force qui peut être exercée par le premier piston 11 est alors deux fois plus grande que la force qui peut être exercée par le deuxième piston 12, pour une même pression en fluide de contrôle.

La figure 5 illustre un principe de fonctionnement possible du dispositif 100 de l'invention. Grâce au dispositif 100 de l'invention, il est possible d'imposer trois positions différentes à une vanne à contrôler, -90°, 0° et +90° par exemple.

La partie gauche de la figure 5 montre une première configuration du dispositif 100 de l'invention, appelée position à -90° dans la suite. Pour cette position, le premier piston 11 est relevé au maximum. La surface supérieure du premier plateau 41 du premier piston 11 est en contact avec une paroi interne supérieur du premier carter 21. Le deuxième piston 12 est également relevé au maximum pour cette position '-90°'. La surface supérieure du deuxième plateau 42 du deuxième piston 12 est en contact avec une paroi interne supérieur du deuxième carter 22. Finalement, l'ergot 5 est également relevé au maximum. Pour obtenir le mode de fonctionnement illustré à la partie gauche de la figure 5, le premier (respectivement deuxième) vérin 1 (respectivement 2) est par exemple alimenté en fluide de contrôle via un deuxième port 62 (respectivement 64).

La partie centrale de la figure 5 montre une deuxième configuration du dispositif 100 de l'invention, appelée position à 0° dans la suite. Pour cette position, le premier piston 11 est descendu au maximum. La surface inférieure du premier plateau 41 du premier piston 11 est en contact avec une paroi interne inférieure du premier carter 21. Le deuxième piston 12 est par contre poussé vers le haut par le fluide de contrôle mais bloqué dans sa progression vers le haut par le premier piston 11. Préférentiellement, le premier piston 11 bloque le deuxième piston 12 à mi course. Il y a donc une position d'équilibre du deuxième piston 12 qui résulte d'un équilibre entre l'action d'une force vers le haut exercée par le fluide de contrôle sur le deuxième plateau 42 et une force vers le bas exercée par le premier piston 11. L'ergot 5 qui est solidaire du deuxième piston 12 est donc dans une position intermédiaire, par exemple à mi course si le deuxième piston 12 est bloqué à mi course. Pour obtenir le mode de fonctionnement illustré à la partie centrale de la figure 5, le premier (respectivement deuxième) vérin 1 (respectivement 2) est par exemple alimenté en fluide de contrôle via un premier (respectivement deuxième) port 61 (respectivement 64).

La partie droite de la figure 5 montre une troisième configuration du dispositif 100 de l'invention, appelée position à +90° dans la suite. Pour cette position, le premier piston 11 est encore descendu ou poussé au maximum. La surface inférieure du premier plateau 41 du premier piston 11 est en contact avec une paroi interne inférieure du premier carter 21. Le deuxième piston 12 est aussi poussé complètement vers le bas par le fluide de contrôle ici. La surface inférieure du deuxième plateau 42 du deuxième piston 12 est donc en contact avec une paroi interne inférieure du deuxième carter 22. L'ergot 5 qui est solidaire du deuxième piston 12 est donc poussé dans une position inférieure, à fond de course. Pour obtenir le mode de fonctionnement illustré à la partie droite de la figure 5, le premier (respectivement deuxième) vérin 1 (respectivement 2) est par exemple alimenté en fluide de contrôle via un premier port 61 (respectivement 63).

Afin de passer de la configuration du dispositif appelée position à 90° à la position appelée position à 0°, le premier piston 11 est maintenu en position descendue ou poussé au maximum vers le bas par le fluide de contrôle injecté via l'entrée de fluide de contrôle 61. La surface inférieure du premier plateau 41 du premier piston 11 est alors en contact avec une paroi interne inférieure du premier carter 21. Le deuxième piston 12 est alors poussé vers le haut par le fluide de contrôle injecté via l'entrée de fluide de contrôle 64. Le plateau 42 du deuxième piston 12 est alors bloqué à mi-course par le premier piston 11. Il y a donc une position d'équilibre du deuxième piston 12 qui résulte d'un équilibre entre l'action d'une force vers le haut exercée par le fluide de contrôle sur le deuxième plateau 42 et une force vers le bas exercée par le premier piston 11. L'ergot 5 qui est solidaire du deuxième piston 12 est donc dans une position intermédiaire, par exemple à mi-course si le deuxième piston 12 est bloqué à mi-course.

Afin de passer de la configuration du dispositif appelée position à 0° à la position appelée position à -90°, le premier piston 11 est remonté ou poussé au maximum vers le haut par le fluide de contrôle injecté via l'entrée de fluide de contrôle 62. La surface supérieure du premier plateau 41 du premier piston 11 est alors en contact avec une paroi interne supérieure du premier carter 21. Le deuxième piston 12 est alors poussé vers le haut par le fluide de contrôle injecté via l'entrée de fluide de contrôle 64. La surface supérieure du deuxième plateau 42 du deuxième piston 12 est alors en contact avec une paroi interne supérieure du deuxième carter 22. L'ergot 5 est alors relevé au maximum et permet d'atteindre la position à -90°.

Afin de passer de la configuration du dispositif appelée position à - 90° à la position appelée position à +90°, le deuxième piston 12 est poussé complètement vers le bas par le fluide de contrôle injecté via l'entrée de fluide 63. La surface inférieure du deuxième plateau 42 du deuxième piston 12 est donc en contact avec une paroi interne inférieure du deuxième carter 22. L'ergot 5 qui est solidaire du deuxième piston 12 est donc poussé dans une position inférieure, à fond de course et permet d'atteindre la position à +90°. Le premier piston 11 n'est pas nécessairement descendu ou poussé au maximum. La surface inférieure du premier plateau 41 du premier piston 11 n'est pas nécessairement en contact avec une paroi interne inférieure du premier carter 21 pour atteindre la position à +90°.

Afin de passer de la configuration du dispositif appelée position à +90° à la position appelée position à -90°, le premier piston 11 est remonté ou poussé au maximum vers le haut, si il ne l'était pas déjà, par le fluide de contrôle injecté via l'entrée de fluide de contrôle 62. La surface supérieure du premier plateau 41 du premier piston 11 est alors en contact avec une paroi interne supérieure du premier carter 21. Le deuxième piston 12 est alors poussé vers le haut par le fluide de contrôle injecté via l'entrée de fluide de contrôle 64. La surface supérieure du deuxième plateau 42 du deuxième piston 12 est alors en contact avec une paroi interne supérieure du deuxième carter 22. L'ergot 5 est alors relevé au maximum et permet d'atteindre la position à - 90°. Pour atteindre la position à -90° en partant de la position à +90°, il est préférable d'actionner le premier piston 11 avant que le deuxième piston 12 ne pousse le premier piston 11 vers le haut. Ainsi il est possible d'atteindre la position à -90° en partant de la position à +90° en un seul mouvement continu grâce à la remontée préalable du premier piston 11 en position haute et à la remontée du deuxième piston 12 correspondant à sa course complète.

D'autres positions angulaires que celles mentionnées à la figure 5 pourraient être envisagées pour les trois configurations du dispositif 100 de l'invention.

Dans le premier vérin 1, le premier plateau 41 du premier piston 11 délimite une première et une deuxième chambre dans le premier carter 21. La première chambre est apte à être alimentée en air comprimé via l'entrée de fluide de contrôle 61. La deuxième chambre est apte à être alimentée en air comprimé via l'entrée de fluide de contrôle 62. Dans le deuxième vérin 2, le deuxième plateau 42 du deuxième piston 12 délimite une troisième et une quatrième chambre dans le deuxième carter 22. La troisième chambre est apte à être alimentée en air comprimé via l'entrée de fluide de contrôle 63. La quatrième chambre est apte à être alimentée en air comprimé via l'entrée de fluide de contrôle 64. Les première, deuxième, troisième et quatrième chambres sont toutes différentes et ne permettent pas de communication de fluide de contrôle d'une chambre à une autre.

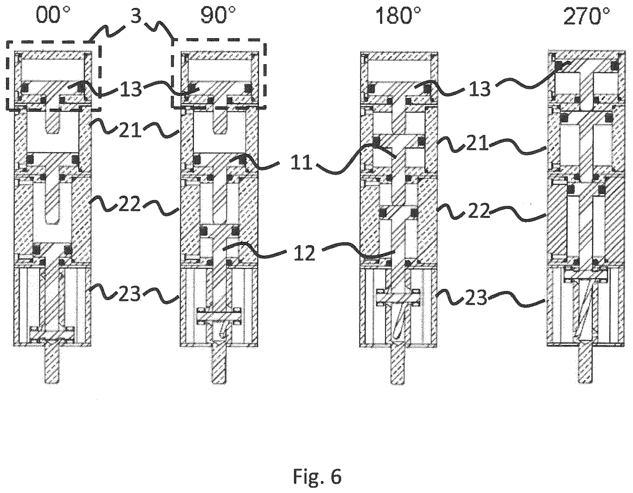

Le dispositif 100 de l'invention peut comprendre plus de deux vérins linéaires. En particulier, le dispositif 100 de l'invention peut comprendre un troisième vérin 3 linéaire couplé par exemple au premier vérin 1. La figure 6 illustre un exemple de dispositif 100 comprenant trois vérins linéaires, un troisième vérin linéaire 3 comprenant un troisième piston 13. En utilisant plus de deux vérins linéaires, il est possible d'avoir un dispositif 100 avec plus de trois configurations ou positions différentes. Par exemple, en utilisant trois vérins linéaires, il est possible d'avoir un dispositif 100 avec quatre positions ou configurations différentes. Dans le cas illustré à la figure 6, les positions suivantes peuvent être obtenues: 0°, 90°, 180° et 270°. D'une manière générale, avec le dispositif 100 de l'invention, un vérin 1 peut limiter (ou pas) la course d'un autre vérin 2, qui peut lui-même limiter (ou pas) la course d'un autre vérin 3, qui peut limiter (ou pas) ...

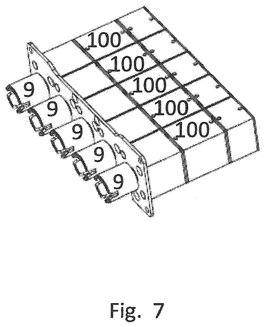

La figure 7 illustre une autre proposition des inventeurs : un assemblage de cinq dispositifs 100 tels que décrits précédemment. Comme on peut le voir sur cette figure, chaque dispositif 100 est de préférence relié à un élément de liaison 9. Les différents dispositifs 100 sont de préférence placés en parallèle et couplés chacun à une vanne à contrôler par exemple.

Les inventeurs proposent aussi un système pour contrôler un passage d'un fluide dans un conduit et comprenant au moins une vanne pour contrôler le passage dudit fluide dans le conduit et au moins un dispositif 100 tel que décrit précédemment, chaque dispositif 100 étant couplé à une vanne à contrôler. En reprenant l'assemblage montré à la figure 7, il est par exemple possible de concevoir un système pour contrôler cinq vannes. Quand chaque dispositif 100 comprend deux vérins (1, 2), trois positions de chaque vanne est alors possible.

Les inventeurs proposent finalement une machine de synthèse ou de purification d'éléments (par exemple radioactifs) comprenant un système tel que décrit dans le paragraphe précédent, une unité de commande pour commander le ou les dispositif(s) dudit système et un conduit, de sorte que la ou les vannes à contrôler est (sont) située(s) dans ledit conduit. Les différentes vannes définissent alors différentes sections du conduit. Avec une telle machine, chaque vanne peut donc être contrôlée individuellement et peut effectuer des rotations dans les deux sens sans avoir à stopper en position intermédiaire. Un fluide contenu dans un réservoir peut être mis sous pression pour entrer dans ledit conduit via une vanne contrôlée par un dispositif 100 tel que décrit précédemment, ladite vanne contrôlant le passage dudit fluide dans une section du conduit. Suivant les positions respectives de chacune des vannes de la machine de synthèse qui sont contrôlées par le dispositif de l'invention, ledit fluide va être dirigé d'une section à l'autre du conduit en passant ou non au travers d'éléments agencés pour traiter ledit fluide. Lesdites vannes pouvant être entraînées selon des rotations dans les deux sens, ledit fluide peut donc passer d'une première section vers une seconde section puis repasser vers ladite première section si nécessaire.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Dispositif (100) pour induire un mouvement de rotation autour d'une direction longitudinale pour le contrôle de vanne et comprenant le long de ladite direction longitudinale :
- un premier vérin (1) linéaire comprenant un premier carter (21) et un premier piston (11) apte à décrire un mouvement de translation le long de ladite direction longitudinale dans ledit premier carter (21), ledit premier vérin (1) étant apte à être alimenté par un fluide de contrôle ;
- un deuxième vérin (2) linéaire comprenant un deuxième carter (22) un deuxième piston (12) apte à décrire un mouvement de translation le long de ladite direction longitudinale dans ledit deuxième carter (22), ledit deuxième vérin (2) étant apte à être alimenté par un fluide de contrôle ;
- un organe de conversion (7) de mouvement linéaire en mouvement rotatif pour convertir un mouvement de translation du deuxième piston (12) le long de ladite direction longitudinale en un mouvement de rotation autour de ladite direction longitudinale ;
lesdits premier (1) et deuxième (2) vérins étant configurés de sorte que le premier vérin (1) est apte à influencer le deuxième vérin (2) ;
et où:
- ledit premier piston (11) comprend un premier plateau (41) apte à délimiter une première et une deuxième chambre dans ledit premier carter (21) ;
- ledit premier vérin (1) comprend un premier et un deuxième ports (61 ; 62) pour alimenter respectivement lesdites première et deuxième chambres avec ledit fluide de contrôle et imposer un mouvement de translation dudit premier piston (11) grâce à une différence de pression entre lesdites première et deuxième chambres :
- ledit deuxième piston (12) comprend un deuxième plateau (42) apte à délimiter une troisième et une quatrième chambre dans ledit deuxième carter (22) ;
- ledit deuxième vérin (2) comprend un troisième et un quatrième ports (63 ; 64) pour alimenter respectivement lesdites troisième et quatrième chambres avec ledit fluide de contrôle et imposer un mouvement de translation dudit deuxième piston (12) grâce à une différence de pression entre lesdites troisième et quatrième chambres ;
et :
- ledit organe de conversion (7) comprend un élément rotatif (31) distinct du deuxième piston (12) pour convertir un mouvement de translation du deuxième piston (12) en un mouvement de rotation, ledit élément rotatif (31) étant situé à l'extérieur des premier et deuxième carters (21 ; 22).

2. Dispositif (100) selon la revendication précédente **caractérisé en ce que** ledit organe de conversion (7) comprend un troisième carter (23) et **en ce que** ledit élément rotatif (31) est situé dans ledit troisième carter (23).

3. Dispositif (100) selon la revendication précédente **caractérisé en ce que** ledit élément rotatif (31) comprend au moins une portion creuse.

4. Dispositif (100) selon l'une quelconque des deux revendications précédentes **caractérisé en ce que** ledit élément rotatif (31) comprend sur au moins une portion d'une surface extérieure dudit élément rotatif (31) une rainure (40).

5. Dispositif (100) selon la revendication précédente **caractérisée en ce que** ladite rainure (40) est hélicoïdale le long de ladite direction longitudinale.

6. Dispositif (100) selon l'une quelconque des deux revendications précédentes **caractérisé en ce qu'**il comprend, au niveau du deuxième piston (12), un ergot (5) s'étendant selon une direction essentiellement perpendiculaire à ladite direction longitudinale et apte à s'insérer dans ladite rainure (40) dudit élément rotatif (31), pour coupler mécaniquement ledit deuxième piston (12) audit élément rotatif (31).

7. Dispositif (100) selon l'une quelconque des revendications précédentes comprenant en outre un élément de liaison (9) rotatif pour s'emboîter sur une vanne à contrôler, ledit élément de liaison (9) étant mécaniquement couplé à un élément dudit organe de conversion (7).

8. Dispositif(100) selon l'une quelconque des revendications précédentes **caractérisé en ce qu'**il est apte à imposer à un arbre de sortie au moins trois positions angulaires différentes séparées de 90° les unes des autres.

9. Dispositif (100) selon l'une quelconque des revendications précédentes **caractérisé en ce que** ledit deuxième vérin (2) à une course deux fois plus grande que ledit premier vérin (1).

10. Dispositif (100) selon l'une quelconque des revendications précédentes **caractérisé en ce que** ledit premier plateau (41) a une surface supérieure audit deuxième plateau (42).

11. Dispositif (100) selon la revendication précédente **caractérisé en ce que** ledit premier plateau (41) a une surface deux fois supérieure audit deuxième plateau (42).

12. Dispositif (100) selon l'une quelconque des revendications précédentes comprenant en outre un troisième vérin (3) linéaire couplé à au moins un des premier (1) et deuxième (2) vérins de sorte qu'une configuration dudit troisième vérin (3) est apte à influencer une configuration d'au moins un des premier (1) et deuxième (2) vérins.

13. Dispositif (100) selon la revendication précédente **caractérisé en ce qu'**il est apte à imposer à un arbre de sortie au moins quatre positions angulaires différentes séparées de 90° les unes des autres.

14. Système pour contrôler un passage d'un fluide dans un conduit et comprenant :
- au moins une vanne pour contrôler ledit passage dudit fluide dans ledit conduit;
- au moins un dispositif (100) selon l'une quelconque des revendications précédentes, chacun dudit au moins un dispositif (100) étant couplé à chacune de ladite au moins une vanne pour la contrôler.

15. Machine de synthèse ou de purification d'éléments et comprenant :
- un système selon la revendication précédente,
- une unité de commande pour commander ledit au moins dispositif (100),
- ledit conduit,
de sorte que l'au moins une vanne est située dans ledit conduit, ledit conduit étant une conduite d'une cassette à usage unique.

## Patentansprüche

1. Vorrichtung (100) zum Induzieren einer Drehbewegung um eine Längsrichtung für die Regelung eines Ventils und entlang der Längsrichtung Folgendes umfassend:
- einen ersten Linearzylinder (1), umfassend ein erstes Gehäuse (21) und einen ersten Kolben (11), der imstande ist, eine Translationsbewegung entlang der Längsrichtung in dem ersten Gehäuse (21) zu beschreiben, wobei der erste Zylinder (1) imstande ist, von einem Regelfluid gespeist zu werden;
- einen zweiten Linearzylinder (2), umfassend ein zweites Gehäuse (22) und einen zweiten Kolben (12), der imstande ist, eine Translationsbewegung entlang der Längsrichtung in dem zweiten Gehäuse (22) zu beschreiben, wobei der zweite Zylinder (2) imstande ist, von einem Regelfluid gespeist zu werden;
- ein Umwandlungsorgan (7) einer Linearbewegung in eine Drehbewegung, um eine Translationsbewegung des zweiten Kolbens (12) entlang der Längsrichtung in eine Drehbewegung um die Längsrichtung umzuwandeln;
wobei der erste (1) und zweite (2) Zylinder derart konfiguriert sind, dass der erste Zylinder (1) imstande ist, den zweiten Zylinder (2) zu beeinflussen;
und wobei:
- der erste Kolben (11) eine erste Platte (41) umfasst, die imstande ist, eine erste und eine zweite Kammer in dem ersten Gehäuse (21) zu begrenzen;
- der erste Zylinder (1) eine erste und eine zweite Öffnung (61; 62) umfasst, um jeweils die erste und zweite Kammer mit dem Regelfluid zu speisen und eine Translationsbewegung des ersten Kolbens (11) dank einer Druckdifferenz zwischen der ersten und zweiten Kammer aufzuzwingen;
- der zweite Kolben (12) eine zweite Platte (42) umfasst, die imstande ist, eine dritte und eine vierte Kammer in dem zweiten Gehäuse (22) zu begrenzen;
- der zweite Zylinder (2) eine dritte und eine vierte Öffnung (63; 64) umfasst, um jeweils die dritte und vierte Kammer mit dem Regelfluid zu speisen und eine Translationsbewegung des zweiten Kolbens (12) dank einer Druckdifferenz zwischen der dritten und vierten Kammer aufzuzwingen;
und:
- das Umwandlungsorgan (7) ein Drehelement (31) umfasst, das sich vom zweiten Kolben (12) unterscheidet, um eine Translationsbewegung des zweiten Kolbens (12) in eine Drehbewegung umzuwandeln, wobei sich das Drehelement (31) außerhalb des ersten und zweiten Gehäuses (21; 22) befindet.

2. Vorrichtung (100) nach dem vorstehenden Anspruch, **dadurch gekennzeichnet, dass** das Umwandlungsorgan (7) ein drittes Gehäuse (23) umfasst und dadurch, dass sich das Drehelement (31) in dem dritten Gehäuse (23) befindet.

3. Vorrichtung (100) nach dem vorstehenden Anspruch, **dadurch gekennzeichnet, dass** das Drehelement (31) mindestens einen hohlen Abschnitt umfasst.

4. Vorrichtung (100) nach einem der zwei vorstehenden Ansprüche, **dadurch gekennzeichnet, dass** das Drehelement (31) auf mindestens einem Abschnitt einer äußeren Oberfläche des Drehelements (31) eine Rille (40) umfasst.

5. Vorrichtung (100) nach dem vorstehenden Anspruch, **dadurch gekennzeichnet, dass** die Rille (40) schraubenförmig entlang der Längsrichtung verläuft.

6. Vorrichtung (100) nach einem der zwei vorstehenden Ansprüche, **dadurch gekennzeichnet, dass** sie auf Höhe des zweiten Kolbens (12) eine Nase (5) umfasst, die sich gemäß einer Richtung erstreckt, die im Wesentlichen senkrecht zu der Längsrichtung verläuft, und die imstande ist, sich in die Rille (40) des Drehelements (31) einzufügen, um den zweiten Kolben (12) mechanisch an das Drehelement (31) zu koppeln.

7. Vorrichtung (100) nach einem der vorstehenden Ansprüche, weiter ein drehbares Verbindungselement (9) zum Aufstecken auf ein zu regelndes Ventil umfassend, wobei das Verbindungselement (9) mechanisch an ein Element des Umwandlungselements (7) gekoppelt ist.

8. Vorrichtung (100) nach einem der vorstehenden Ansprüche, **dadurch gekennzeichnet, dass** sie imstande ist, einer Ausgangswelle mindestens drei unterschiedliche Winkelpositionen aufzuzwingen, die um 90° voneinander getrennt sind.

9. Vorrichtung (100) nach einem der vorstehenden Ansprüche, **dadurch gekennzeichnet, dass** der zweite Zylinder (2) einen zweimal größeren Hub aufweist als der erste Zylinder (1).

10. Vorrichtung (100) nach einem der vorstehenden Ansprüche, **dadurch gekennzeichnet, dass** die erste Platte (41) eine größere Oberfläche aufweist als die zweite Platte (42).

11. Vorrichtung (100) nach dem vorstehenden Anspruch, **dadurch gekennzeichnet, dass** die erste Platte (41) eine zweimal größere Oberfläche aufweist als die zweite Platte (42).

12. Vorrichtung (100) nach einem der vorstehenden Ansprüche, weiter umfassend einen dritten Linearzylinder (3), der an mindestens einen des ersten (1) und zweiten (2) Zylinders gekoppelt ist, sodass eine Konfiguration des dritten Zylinders (3) imstande ist, eine Konfiguration mindestens eines des ersten (1) und zweiten (2) Zylinders zu beeinflussen.

13. Vorrichtung (100) nach dem vorstehenden Anspruch, **dadurch gekennzeichnet, dass** sie imstande ist, einer Ausgangswelle mindestens vier unterschiedliche Winkelpositionen aufzuzwingen, die um 90° voneinander getrennt sind.

14. System zum Regeln eines Durchflusses eines Fluids in einer Leitung und umfassend:
- mindestens ein Ventil zum Regeln des Durchflusses des Fluids in der Leitung;
- mindestens eine Vorrichtung (100) nach einem der vorstehenden Ansprüche, wobei jede der mindestens einen Vorrichtung (100) an jedes des mindestens einen Ventils gekoppelt ist, um es zu regeln.

15. Maschine zur Synthese und Reinigung von Elementen und umfassend:
- ein System nach dem vorstehenden Anspruch,
- eine Steuereinheit zum Steuern der mindestens einen Vorrichtung (100),
- die Leitung,
sodass sich das mindestens eine Ventil in der Leitung befindet, wobei die Leitung eine Leitung einer Einwegkassette ist.

## Claims

1. Device (100) for imparting a rotary movement about a longitudinal direction for the valve control and comprising along said longitudinal direction:
- a first linear hydraulic cylinder (1) comprising a first casing (21) and a first piston (11) able to provide a translation movement along said longitudinal direction in said first casing (21), said first hydraulic cylinder (1) being able to be supplied by a control fluid;
- a second linear hydraulic cylinder (2) comprising a second casing (22) a second piston (12) able to provide a translation movement along said longitudinal direction in said second casing (22), said second hydraulic cylinder (2) being able to be supplied by a control fluid;
- a member (7) for converting linear motion into rotary motion in order to convert a translation movement of the second piston (12) along said longitudinal direction into a rotary movement about said longitudinal direction;
said first (1) and second (2) hydraulic cylinders being configured in such a way that the first hydraulic cylinder (1) is able to influence the second hydraulic cylinder (2);
and wherein:
- said first piston (11) comprises a first plate (41) able to determine a first and a second chamber in said first casing (21);
- said first hydraulic cylinder (1) comprises a first and a second ports (61; 62) in order to respectively supply said first and second chambers with said control fluid and impose a translation movement of said first piston (11) thanks to a difference in pressure between said first and second chambers;
- said second piston (12) comprises a second plate (42) able to delimit a third and a fourth chamber in said second casing (22);
- said second hydraulic cylinder (2) comprises a third and a fourth ports (63; 64) in order to respectively supply said third and fourth chambers with said control fluid and impose a translation movement of said second piston (12) thanks to a difference in pressure between said third and fourth chambers;
and:
- said member (7) for converting comprises a rotating element (31) separate from the second piston (12) in order to convert a translation movement of the second piston (12) into a rotary movement, said rotating element (31) being located outside of the first and second casings (21; 22).

2. Device (100) as claimed in the preceding claim **characterised in that** said member (7) for converting comprises a third casing (23) and **in that** said rotating element (31) is located in said third casing (23).

3. Device (100) as claimed in the preceding claim **characterised in that** said rotating element (31) comprises at least one hollow portion.

4. Device (100) according to any one of the two preceding claims **characterised in that** said rotating element (31) comprises over at least one portion of an external surface of said rotating element (31) a groove (40).

5. Device (100) as claimed in the preceding claim **characterised in that** said groove (40) is helical along said longitudinal direction.

6. Device (100) according to any one of the two preceding claims **characterised in that** it comprises, on the second piston (12), a pin (5) extending in a direction that is substantially perpendicular to said longitudinal direction and able to be inserted into said groove (40) of said rotating element (31), in order to mechanically couple said second piston (12) to said rotating element (31).

7. Device (100) as claimed in any preceding claim further comprising a rotating connecting element (9) to be fitted onto a valve to be controlled, said connecting element (9) being mechanically coupled to an element of said member (7) for converting.

8. Device (100) as claimed in any preceding claim **characterised in that** it is able to impose on an output shaft at least three different angular positions separated by 90° from one another.

9. Device (100) as claimed in any preceding claim **characterised in that** said second hydraulic cylinder (2) has a stroke that is twice as large as said first hydraulic cylinder (1).

10. Device (100) as claimed in any preceding claim **characterised in that** said first plate (41) has a surface greater than said second plate (42).

11. Device (100) as claimed in the preceding claim **characterised in that** said first plate (41) has a surface two time greater than said second plate (42).

12. Device (100) as claimed in any preceding claim further comprising a third linear hydraulic cylinder (3) coupled to at least one of the first (1) and second (2) hydraulic cylinders in such a way that a configuration of said third hydraulic cylinder (3) is able to influence a configuration of at least one of the first (1) and second (2) hydraulic cylinders.

13. Device (100) as claimed in the preceding claim **characterised in that** it is able to impose on an output shaft at least four different angular positions separated by 90° from one another.

14. System for controlling the passage of a fluid in a duct and comprising:
- at least one valve for controlling said passage of said fluid in said duct;
- at least one device (100) as claimed in any preceding claim, with each one of said at least one device (100) being coupled to each one of said at least one valve for controlling it.

15. Machine for synthesising or purifying elements and comprising:
- a system as claimed in the preceding claim,
- a control unit for controlling said at least one device (100),
- said duct,
in such a way that at least one valve is located in said duct, said duct is a duct with a single-use cassette.
